# EUROPEAN PATENT APPLICATION

(11) **EP 3 594 098 A1**
(43) Date of publication of application: **15.01.2020**
(21) Application number: 18763528.9
(22) Date of filing: 12.01.2018
(51) Int. Cl.: B63B 9/00, B63H 21/30, F16F 1/12, F16F 15/067

(54) **VIBRATION-PROOF DEVICE AND VIBRATION-PROOF ENGINE**

(30) Priority: 08.03.2017 JP 2017043775
(71) Applicant: Yanmar Co., Ltd., Osaka-shi, Osaka 530-8311 (JP)
(72) Inventor: TOMITA, Nobuhisa, Osaka-shi Osaka 530-8311 (JP)
(74) Representative: Isarpatent
(86) International application number: PCT/JP2018/000595
(87) International publication number: WO 2018/163596

(57) **Abstract**

A vibration isolator (20) includes coil springs (24), a first inclination part (21), and a second inclination part (22). The coil springs (24) are disposed between a hull (2) of a ship and a propulsive engine (4) and absorbs vibration of the propulsive engine (4). The first inclination part (21) has a first inclined surface (21a) corresponding to a rake angle and is disposed between the hull (2) and the coil springs (24), the first inclination part (21) causing an attachment surface for the coil springs (24) on the side close to the hull (2) to be inclined with respect to the hull (2) so that the attachment surface approximates a horizontal plane. The second inclination part (22) has a second inclined surface (22a) corresponding to the rake angle and is disposed between the propulsive engine (4) and the coil springs (24), the second inclination part (22) causing an attachment surface for the coil springs (24) on the side close to the propulsive engine (4) to be inclined with respect to the propulsive engine (4) so that the attachment surface approximates a horizontal plane.

## Description

### Technical Field

The present invention primarily relates to a vibration isolator for isolating vibration of an engine for a ship.

### Background Art

In a conventionally known structure, a vibration isolator is provided between an engine and a hull so as to hinder mutual transmission of vibration between the engine and the hull. Patent Literature 1 (hereinafter, PTL 1) discloses this type of technique.

PTL 1 discloses a structure where vibration of an engine is isolated by disposing a coil spring between the hull and the engine.

### Citation List

### Patent Document

PTL 1: Japanese Patent Application Laid-Open No. 2016-17552

### Summary of Invention

### Technical Problem

In a ship, an engine may be supported at an inclination with respect to a horizontal plane, in accordance with, for example, the angle of a driving transmission shaft of a propulsive unit. In PTL 1, however, a vibration isolating structure for a case where the engine is disposed at an inclination with respect to a horizontal plane is not disclosed. If the structure according to PTL 1 is applied to a case where the engine is disposed at an inclination with respect to a horizontal plane, the engine can easily be displaced along the hull and accordingly, load may be added to, for example, an elastic joint connected to the engine.

The present invention has been made in view of such circumstances, and a primary object of the invention is to provide a structure of a vibration isolator used when an engine for a ship is disposed at an inclination with respect to a horizontal plane, which can reduce displacement of the engine in a direction along the hull.

### Solution to Problem and Advantageous Effects of Invention

The problems that the present invention attempts to solve are described above and next, solutions for solving the problems and advantages thereof will be described.

In an aspect of the present invention, a vibration isolator with the following structure is provided. That is, the vibration isolator isolates vibration of an engine used for propulsion of a ship and disposed at an inclination with respect to a horizontal plane to have a rake angle. The vibration isolator includes a coil spring, a first inclination part, and a second inclination part. The coil spring is disposed between the hull of the ship and the engine and absorbs vibration of the engine. The first inclination part has a first inclined surface corresponding to the rake angle and is disposed between the hull and the coil spring, the first inclination part causing an attachment surface for the coil spring on the side close to the hull to be inclined with respect to the hull so that the attachment surface approximates a horizontal plane. The second inclination part has a second inclined surface corresponding to the rake angle and is disposed between the engine and the coil spring, the second inclination part causing an attachment surface for the coil spring on the side close to the engine to be inclined with respect to the engine so that the attachment surface approximates a horizontal plane.

Thus, causing the attachment surfaces of the coil spring on both sides to approximate a horizontal plane enables the coil spring to be inclined with respect to the hull and the engine so that the axial direction of the coil spring approximately agrees with the vertical direction. Accordingly, displacement of the engine in a direction along the hull can be suppressed. As a result, load added to the elastic joint or the like can be reduced.

The above-described vibration isolator may preferably have the following structure. That is, the vibration isolator includes a housing that accommodates the coil spring. The first inclination part is disposed between the housing and the hull. The second inclination part is disposed between the housing and the engine.

Thus, in the vibration isolator, just replacing the first inclination part and the second inclination part can bring adaptability to various rake angles. Accordingly, versatility of the coil spring accommodated in the housing can be increased.

The above-described vibration isolator may preferably have the following structure. That is, the vibration isolator includes a housing that accommodates the coil spring. The first inclination part is disposed between the housing and the coil spring and on the side close to the hull. The second inclination part is disposed between the housing and the coil spring and on the side close to the engine.

Thus, excellent workability of placement can be brought since the placement of the vibration isolator is completed only by disposing the housing between the engine and the hull. Further, a simple external appearance can be achieved since the first inclination part and the second inclination part are disposed inside the housing.

In the above-described vibration isolator, it is preferable that an intermediate and high frequency attenuation member that attenuates intermediate and high frequency vibration be disposed at least between the hull and the coil spring or between the engine and the coil spring.

Thus, intermediate and high frequency vibration transmitted from the propulsive engine and the propulsive unit to the hull can be reduced. Accordingly, occurrence of fretting in a power generation engine during a halt can be prevented.

The above-described vibration isolator may preferably have the following structure. That is, the vibration isolator includes a housing that accommodates the coil spring. The intermediate and high frequency attenuation member is disposed at least between the housing and the hull or between the housing and the engine.

Thus, the degree of attenuation of intermediate and high frequency vibration can be varied only by replacing the intermediate and high frequency attenuation member. Accordingly, versatility of the coil spring accommodated in the housing can be increased.

The above-described vibration isolator may preferably have the following structure. That is, the vibration isolator includes a housing that accommodates the coil spring. The intermediate and high frequency attenuation member is disposed between the housing and the coil spring.

Thus, excellent workability of placement can be brought since the placement of the vibration isolator is completed only by disposing the housing between the engine and the hull. Further, a simple external appearance can be achieved because the intermediate and high frequency attenuation member is disposed inside the housing.

In another aspect of the present invention, a vibration isolation engine is provided, which includes the vibration isolator and an engine whose vibration is isolated by the vibration isolator.

Thus, an engine capable of exerting the above-described effects can be achieved.

### Brief Description of Drawings

[FIG. 1] A schematic side view of a ship with an engine supporting structure according to an embodiment.
[FIG. 2] A schematic diagram illustrating an engine supported by a vibration isolator according to a first embodiment.
[FIG. 3] A schematic diagram illustrating an engine supported by a vibration isolator according to a second embodiment.
[FIG. 4] A schematic diagram illustrating an engine supported by a vibration isolator according to a third embodiment.
[FIG. 5] A schematic diagram illustrating an engine supported by a vibration isolator according to a fourth embodiment.

### Description of Embodiments

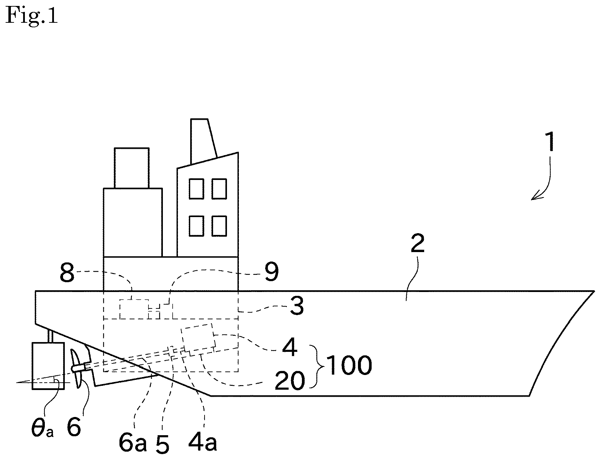

Embodiments of the present invention are described below with reference to the drawings. Referring first to FIG. 1, a ship 1 is described, where a vibration isolator according to an embodiment is provided. FIG. 1 is a schematic side view of the ship 1. It should be understood that, in the description below, terms used in explaining positional relations, sizes, shapes, or the like indicate not only structures that completely satisfy the meanings of the terms but also structures that approximately satisfy the meanings of the terms.

As illustrated in FIG. 1, an engine room 3 is provided in a hull 2 of the ship 1. In the engine room 3, a propulsive engine 4, an elastic joint 5, a power generation engine 8, and a power generator 9 are disposed.

The propulsive engine 4 is a diesel engine that produces driving force for moving the ship 1. The propulsive engine 4 is supported by the vibration isolator 20 (or the vibration isolator 30) on the hull 2. A structure including the propulsive engine 4 and the vibration isolator 20 (or the vibration isolator 30) is referred to as a vibration isolation engine 100. The driving force produced by the propulsive engine 4 is output from a rotation axis member 4a. A propulsive unit 6 is connected to the rotation axis member 4a with interposition of the elastic joint 5 and a rotation axis member 6a.

The elastic joint 5 connects the rotation axis member 4a, which is on the side close to the propulsive engine 4, to the rotation axis member 6a, which is on the side close to the propulsive unit 6. The elastic joint 5 transmits rotating force of the rotation axis member 4a to the rotation axis member 6a. The elastic joint 5 can absorb the force exerted on the rotation axis member 4a and the rotation axis member 6a in a radial direction by becoming deformed elastically. Usually, force in an axial direction is less absorbable for the elastic joint 5 than force in a radial direction.

The propulsive unit 6 is a screw, for example, which uses power transmitted from the propulsive engine 4 through the rotation axis member 4a and the rotation axis member 6a to cause propulsion for moving the ship 1.

In the present embodiment, the rotation axis member 4a and the rotation axis member 6a are inclined with respect to the horizontal direction (the direction perpendicular to the vertical direction) by degrees equivalent to a rake angle θa. Accordingly, an engine support surface where the propulsive engine 4 is supported is also inclined with respect to the horizontal direction by the rake angle θa.

The power generation engine 8 is a diesel engine that produces driving force for generating power in the ship. The power generator 9 generates power using the driving force produced by the power generation engine 8. The power generation engine 8 may be installed in the ship 1 singly or with one or more other power generation engines 8. If the number of the power generation engines 8 installed is two or more, the power generation engines 8 may be partially stopped, depending on necessary electric power or the like.

Although, in the present embodiment, the vibration isolator 20 is used as a structure for supporting the propulsive engine 4, a similar supporting structure may be used so as to support the power generation engine 8. At least one of the propulsive engine 4 and the power generation engine 8 may be an engine (e.g. a gasoline engine) different in configuration from a diesel engine.

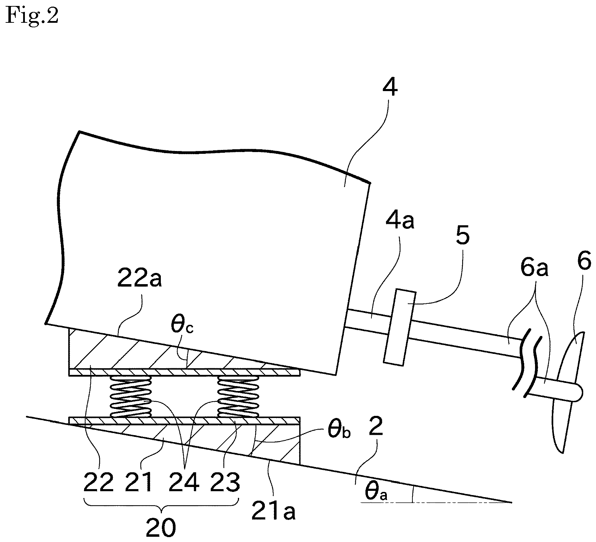

Next, a first embodiment of an engine supporting structure is described with reference to FIG. 2. FIG. 2 is a schematic diagram illustrating the propulsive engine 4 supported by the vibration isolator 20 according to the first embodiment.

First, possible obstacles to vibration isolation using a coil spring in a structure including a rake angle θa are described. In a typical structure employed for a coil spring, rigidity is low so that the frequency of natural vibration can be low. Particularly, in a coil spring, the rigidity in a direction perpendicular to the axial direction is lower than the rigidity in the axial direction. Accordingly, if force in a direction perpendicular to the axial direction is applied to the coil spring, the amount of displacement is increased.

In a structure including the rake angle θa, as illustrated in FIG. 2, the hull 2 (specifically, a placement surface for placing the propulsive engine 4) is inclined, in accordance with the rake angle θa, and in addition, the propulsive engine 4 is also disposed at an inclination corresponding to the rake angle θa. Assumed below is a case where the coil spring is disposed so that the placement surface can be perpendicular to the axial direction of the coil spring. In this case, force in a direction along the placement surface, which is included in the self-weight of the propulsive engine 4, acts in a direction perpendicular to the axial direction of the coil spring. Accordingly, the amount of displacement of the coil spring increases and the rotation axis member 4a presses the elastic joint 5 in the direction along the rake angle θa (the axial direction of the rotation axis member 4a). As described above, the elastic joint 5 has resistance to force in a radial direction but has insufficient resistance to force in the axial direction. Accordingly, large load can be applied to the elastic joint 5.

In view of the above, in the present invention, even in a structure including the rake angle θa, the coil spring is disposed so that the axial direction of the coil spring can agree with the vertical direction (i.e. can approximately go along the vertical direction). The details are described below.

As illustrated in FIG. 2, the vibration isolator 20 according to the first embodiment includes a first inclination part 21, a second inclination part 22, a housing 23, and coil springs 24.

The first inclination part 21 is disposed between the hull 2 and the housing 23. The first inclination part 21 is a triangular-pole-like member whose cross section forms a right-angled triangle, and one of two acute angles thereof (in the present embodiment, θb, which is the smaller angle) is equivalent to the rake angle θa. Thus, the first inclination part 21 has a first inclined surface 21a corresponding to the rake angle θa. The angle equivalent to the rake angle θa encompasses not only the angle precisely identical but also angles approximate to some extent. Angles not precisely identical are caused for various reasons. Examples of such reasons conceivable include a tiny error in manufacture or slight variation in angle intended in view of other circumstances in design. The first inclination part 21 is disposed so that the first inclined surface 21a is attached to the hull 2.

The housing 23 is disposed between the first inclined surface 21a and the coil springs 24. The housing 23 is a member disposed to cover the coil springs 24 arranged therein. Specifically, the housing 23 includes an upper plate, which covers upper portions of the coil springs 24, and a lower plate, which covers lower portions of the coil springs 24. When the coil springs 24 are elastically deformed, the housing 23 changes its position integrally with the coil springs 24.

The coil springs 24 are disposed between the upper plate and lower plate of the housing 23. The coil springs 24 can reduce vibration traveling from the propulsive engine 4 toward the hull 2 and reduce vibration traveling from the hull 2 toward the propulsive engine 4.

The second inclination part 22 is disposed between the housing 23 (the upper plate) and the propulsive engine 4. Similar to the first inclination part 21, the second inclination part 22 is a triangular-pole-like member whose cross section forms a right-angled triangle, and one of two acute angles thereof (in the present embodiment, θc, which is the smaller angle) is equivalent to the rake angle θa. Thus, the second inclination part 22 has a second inclined surface 22a corresponding to the rake angle θa. The second inclination part 22 is disposed so that the second inclined surface 22a is attached to the propulsive engine 4. The first inclined surface 21a and the second inclined surface 22a correspond to the oblique sides of the right-angled triangles.

In the structure described above, the first inclination part 21 causes the lower plate of the housing 23, which is an attachment surface under the coil springs 24 (on the side close to the hull 2), to be inclined with respect to the hull 2 (specifically, the placement surface of the hull 2) so that the lower plate of the housing 23 approximates a horizontal plane (a surface perpendicular to the vertical direction, about which the same applies hereinafter). Similarly, the second inclination part 22 causes the upper plate of the housing 23, which is an attachment surface over the coil springs 24 (on the side close to the propulsive engine 4), to be inclined with respect to the propulsive engine 4 (specifically, a placed surface of the propulsive engine 4) so that the upper plate of the housing 23 is brought approximate to a horizontal plane. Accordingly, the axial direction of the coil spring 24 approximately agrees with the vertical direction and thus, the propulsive engine 4 and the rotation axis member 4a are less likely to be displaced in a direction along the axial direction of the rotation axis member 4a. As a result, load applied to the elastic joint 5 can be reduced.

The attachments between the hull 2 and the first inclination part 21, between the first inclination part 21 and the housing 23, between the housing 23 and the coil springs 24, between the housing 23 and the first inclination part 21, and between the first inclination part 21 and the propulsive engine 4 may be performed by any methods for which welding, fixing using a fixture, crimping, an adhesive, or the like can be employed as appropriate. These members are not limited to the structures where they are directly connected but may be attached with interposition of another member.

Since the rake angle θa differs according to the ship, the first inclination part 21 and the second inclination part 22 whose shapes are defined by the rake angle θa are low in versatility. In contrast, the housing 23 and the coil springs 24 are high in versatility since they are independent of the rake angle θa. That is, even when the vibration isolator 20 is manufactured for a plurality of ships with different rake angles θa, common respective components can be used as the housing 23 and the coil springs 24. As a result, the vibration isolator 20 can easily be made inexpensive.

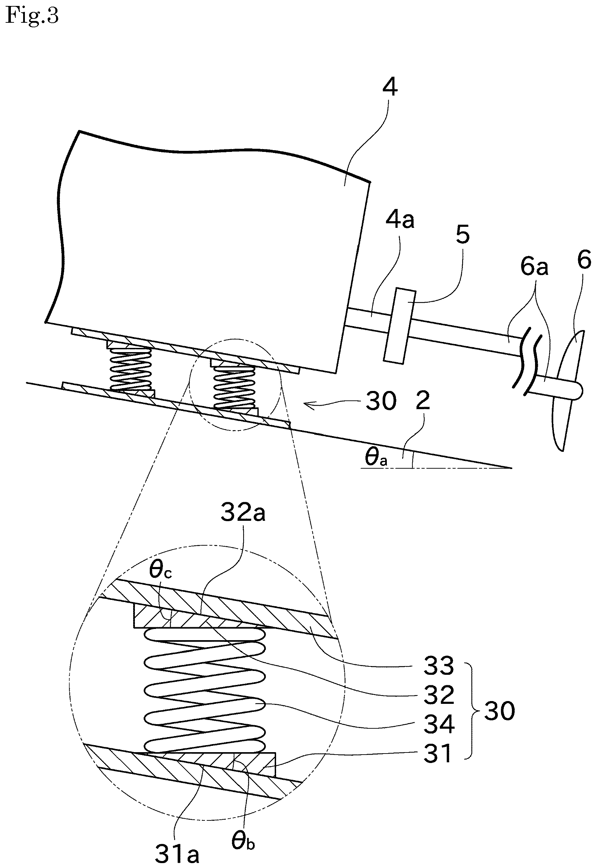

A second embodiment is described below with reference to FIG. 3. FIG. 3 is a schematic diagram illustrating a propulsive engine 4 supported by a vibration isolator 30 according to the second embodiment. In the description of the second embodiment and embodiments thereafter, parts that are identical or similar to those in the first embodiment are given identical reference numerals in the drawings, and explanations of these parts may be omitted. Since the second embodiment is different from the first embodiment in basic structure, a vibration isolator and components thereof are given different reference numerals.

The vibration isolator 30 according to the second embodiment includes a first inclination part 31, a second inclination part 32, a housing 33, and coil spring 34. The vibration isolator 30 is different from the vibration isolator of the first embodiment in that the first inclination part 31 and the second inclination part 32 are disposed in the housing 33.

Specifically, the first inclination part 31 is disposed on an upper surface of a lower plate of the housing 33 with a first inclined surface 31a facing downward (toward the hull 2). The coil springs 34 are disposed on an upper surface of the first inclination part 31. The second inclination part 32 is disposed on the coil spring 34 with a second inclined surface 32a facing upward (toward the propulsive engine 4). An upper plate of the housing is disposed on the second inclined surface 32a of the second inclination part 32.

In this structure, the first inclination part 31 causes the upper surface of the first inclination part 31, which is an attachment surface under the coil springs 34 (on the side close to the hull 2), to be inclined with respect to the hull 2 so that the upper surface of the first inclination part 31 approximates a horizontal plane. Similarly, the second inclination part 32 causes a lower surface of the second inclination part 32, which is an attachment surface over the coil springs 34 (on the side close to the propulsive engine 4), to be inclined with respect to the propulsive engine 4 so that the lower surface of the second inclination part 32 approximates a horizontal plane. Accordingly, the axial direction of the coil spring 34 approximately agrees with the vertical direction and thus, the propulsive engine 4 and the rotation axis member 4a are less likely to be displaced in a direction along the axial direction of the rotation axis member 4a. As a result, load applied to the elastic joint 5 can be reduced.

Moreover, in the present embodiment, the first inclination part 31 and the second inclination part 32 are disposed inside the housing 33. This structure can offer excellent workability since the placement of the vibration isolator 30 is completed only by disposing the housing 33 between the hull 2 and the propulsive engine 4. In addition, the external appearance of the vibration isolator 30 can be simplified.

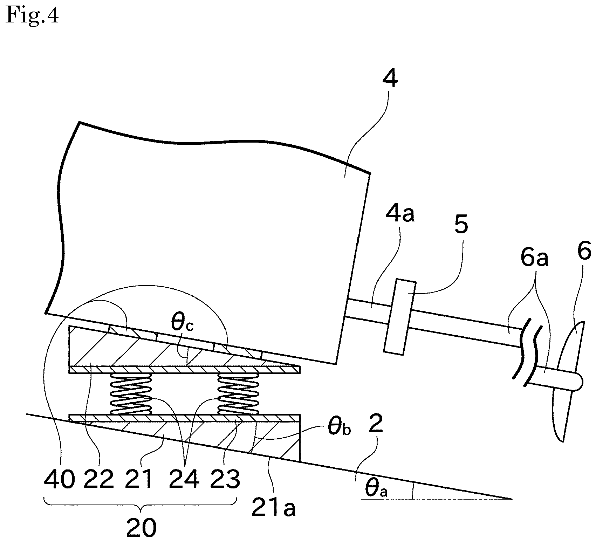

A third embodiment is described below with reference to FIG. 4. FIG. 4 is a schematic diagram illustrating a propulsive engine 4 supported by a vibration isolator 20 according to the third embodiment.

In the vibration isolator 20 according to the third embodiment, an intermediate and high frequency attenuation member 40 is additionally provided in the vibration isolator 20 of the first embodiment. The intermediate and high frequency attenuation member 40 is, for example, a member tailored to attenuate vibration of intermediate and high frequencies of 100 Hz and higher or 200 Hz and higher. The intermediate and high frequency attenuation member 40 is, for example, a mesh spring obtained by braiding a metallic wire, a vibration-proof rubber, or the like.

In the third embodiment, the intermediate and high frequency attenuation member 40 is disposed between the propulsive engine 4 and a second inclination part 22. The intermediate and high frequency attenuation member 40 may be disposed between a hull 2 and a first inclination part 21. In view of the efficiency of vibration isolation, the intermediate and high frequency attenuation member 40 is preferably disposed between the propulsive engine 4 and the second inclination part 22. The intermediate and high frequency attenuation members 40 may be disposed both between the propulsive engine 4 and the second inclination part 22, and between the hull 2 and the first inclination part 21. In the third embodiment, the intermediate and high frequency attenuation members 40 are provided for the respective coil springs 24, and are disposed at positions above the corresponding coil springs 24. Another disposition may be employed instead. That is, the intermediate and high frequency attenuation members 40 may be disposed at positions other than those above the coil springs 24 or one intermediate and high frequency attenuation member 40 may be provided above a plurality of coil springs 24.

The employment of the intermediate and high frequency attenuation member 40 can bring effects, such as (1) prevention of fretting, (2) suppression of occurrence of a malfunction in a precision apparatus, and the like. As described above, a plurality of power generation engines 8 are disposed in a ship 1 and, depending on required electric power, some of the power generation engine 8 is/are not operating even during navigation. A crankshaft of the power generation engine 8 not operating is not supplied with a sufficient lubricating oil. However, since the navigation is ongoing, vibration may be transmitted from the propulsive engine 4, the propulsive unit 6, and the like and as a result, the power generation engine 8 not operating may rub against a bearing directly (without mediation of the lubricating oil) (as fretting).

In this regard, vibration of the propulsive engine 4 according to the third embodiment is isolated by the coil springs 24 and the intermediate and high frequency attenuation member 40. The coil spring 24 is excellent in attenuation of low frequency vibration, and the intermediate and high frequency attenuation member 40 is excellent in attenuation of intermediate and high frequency vibration. Therefore, low frequency vibration and intermediate and high frequency vibration of the propulsive engine 4 and the propulsive unit 6 are reduced through the vibration isolator 20 and thus are not easily transmitted to the hull 2. Accordingly, such vibration is not easily transmitted to the power generation engine 8 installed in the hull 2, either. As a result, fretting can be prevented.

In the hull 2, various precision apparatuses including a communication apparatus and an information apparatus are disposed. If such a precision apparatus receives intermediate and high frequency vibration, a malfunction can be caused. In this regard, since use of the vibration isolator 20 according to the third embodiment hinders intermediate and high frequency vibration of the propulsive engine 4 and the propulsive unit 6 from being transmitted to the hull 2, a malfunction is not easily caused in a precision apparatus installed in the hull 2.

In the third embodiment, the vibration isolation for the propulsive engine 4 prevents propagation of vibration to the power generation engine 8. The vibration isolator 20 according to the third embodiment or a vibration isolator 30 according to a fourth embodiment described later can be applied to the power generation engine 8. In this case, the rake angle θa is not set for the placement surface for the power generation engine 8 and thus, a structure except the first inclination part 21 or 31 and the second inclination part 22 or 32 is applied to the power generation engine 8.

In the third embodiment, similar to the first embodiment, the intermediate and high frequency attenuation members 40 are disposed outside the housing 23 and thus, effects similar to those obtained in the first embodiment can be exerted.

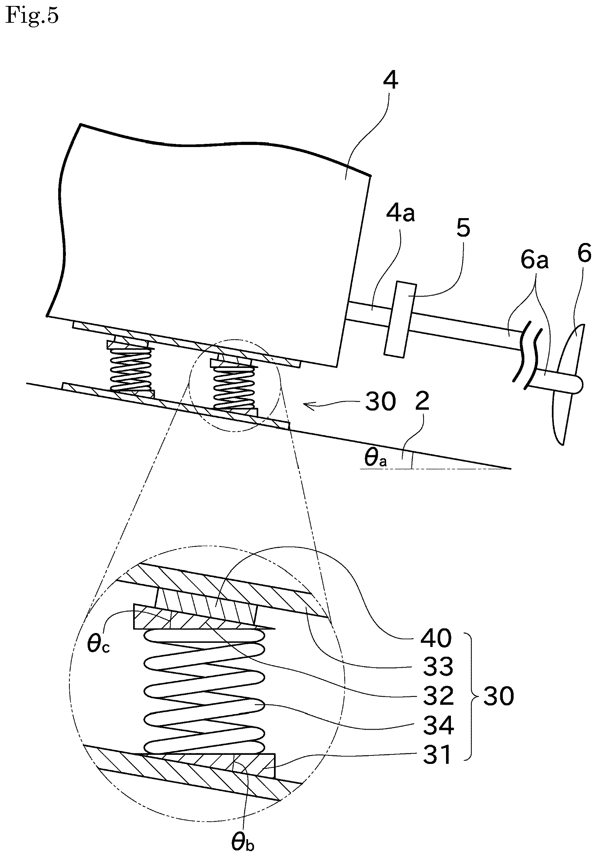

The fourth embodiment of the present invention is described below with reference to FIG. 5. FIG. 5 is a schematic diagram illustrating a propulsive engine 4 supported by the vibration isolator 30 according to the fourth embodiment.

In the vibration isolator 30 according to the fourth embodiment, an intermediate and high frequency attenuation member 40 is additionally provided in the vibration isolator 30 according to the second embodiment. The vibration isolator 30 according to the fourth embodiment is different from the vibration isolator 20 according to the third embodiment in that the intermediate and high frequency attenuation member 40 is disposed inside a housing 33 instead of being disposed outside the housing 23.

The intermediate and high frequency attenuation members 40 according to the fourth embodiment are disposed between an upper plate of the housing 33 and coil springs 34. The intermediate and high frequency attenuation members 40 may be disposed between a lower plate of the housing 33 and the coil springs 34 (similar to the third embodiment, may preferably be disposed closer to the propulsive engine 4). The intermediate and high frequency attenuation members 40 may be disposed on both the upper plate and lower plate of the housing 33. Effects obtained by attenuating intermediate and high frequency vibration are the same as those in the third embodiment.

In the vibration isolator 30 according to the fourth embodiment, similar to the vibration isolator 30 according to the second embodiment, the intermediate and high frequency attenuation members 40 are also disposed inside the housing 33 in addition to the first inclination part 31 and the second inclination part 32. Accordingly, similar effects to those in the second embodiment can be exerted.

As described above, the vibration isolators 20 and 30 according to the foregoing embodiments can each isolate vibration of the propulsive engine 4 that is used for propulsion of the ship 1 and that is disposed at an inclination with a rake angle with respect to a horizontal plane. The vibration isolators 20 and 30 include the coil springs 24 and 34, the first inclination parts 21 and 31, and the second inclination parts 22 and 32, respectively. The coil springs 24 and 34 are each disposed between the hull 2 of the ship 1 and the propulsive engine 4 and absorb vibration of the propulsive engine 4. The first inclination part 21, 31 has the first inclined surface 21a, 31a corresponding to the rake angle and is disposed between the hull 2 and the coil springs 24, 34. The first inclination part 21, 31 causes the attachment surface for the coil springs 24, 34 on the side close to the hull 2 to be inclined with respect to the hull 2 (specifically, the placement surface of the hull 2) so that the attachment surface approximates a horizontal plane. The second inclination part 22, 32 has the second inclined surface 22a, 32a corresponding to the rake angle and is disposed between the propulsive engine 4 and the coil springs 24, 34. The second inclination part 22, 32 causes the attachment surface for the coil springs 24, 34 on the side close to the propulsive engine 4 to be inclined with respect to the propulsive engine 4 (specifically, the placed surface of the propulsive engine 4) so that the attachment surface approximates a horizontal plane.

Thus, the coil springs 24 and 34 can be inclined with respect to the hull 2 and the propulsive engine 4 so that the respective axial directions of the coil springs 24 and 34 approximately agree with the vertical direction. Accordingly, displacement of the propulsive engine 4 in a direction along the hull 2 can be suppressed. As a result, for example, load applied to the elastic joint 5 or the like can be reduced.

The vibration isolator 20 according to the above-described embodiment includes the housing 23 that accommodates the coil springs 24. The first inclination part 21 is disposed between the housing 23 and the hull 2. The second inclination part 22 is disposed between the housing 23 and the propulsive engine 4.

Thus, just replacing the first inclination part 21 and the second inclination part 22 can bring adaptability to various rake angles. Accordingly, versatility of the coil springs 24 accommodated in the housing 23 can be increased.

The vibration isolator 30 according to the above-described embodiment includes the housing 33 that accommodates the coil springs 34. The first inclination part 31 is disposed between the housing 33 and the coil springs 34 and on the side close to the hull 2. The second inclination part 32 is disposed between the housing 33 and the coil springs 34 and on the side close to the propulsive engine 4.

Thus, excellent workability of placement can be brought since the placement of the vibration isolator 30 is completed only by disposing the housing 33 between the propulsive engine 4 and the hull 2. Further, a simple external appearance can be achieved since the first inclination part 31 and the second inclination part 32 are disposed inside the housing 33.

In the vibration isolators 20 and 30 according to the above-described embodiments, the intermediate and high frequency attenuation members 40 that attenuate intermediate and high frequency vibration are disposed at least between the hull 2 and the coil springs 24 and 34, or between the propulsive engine 4 and the coil springs 24 and 34.

Thus, intermediate and high frequency vibration transmitted from the propulsive engine 4 and the propulsive unit 6 to the hull 2 can be reduced. Accordingly, occurrence of fretting in the power generation engine 8 during a halt can be prevented. Moreover, a malfunction in a precision apparatus caused by vibration can be less likely to occur.

The vibration isolator 20 according to the above-described embodiment includes the housing 23 that accommodates the coil springs 24. The intermediate and high frequency attenuation members 40 are disposed at least between the housing 23 and the hull 2 or between the housing 23 and the propulsive engine 4.

Thus, the degree of attenuation of intermediate and high frequency vibration can be varied only by replacing the intermediate and high frequency attenuation members 40. Accordingly, versatility of the coil springs 24 accommodated in the housing 23 can be increased.

The vibration isolator 30 according to the above-described embodiment includes the housing 33 that accommodates the coil springs 34. The intermediate and high frequency attenuation members 40 are disposed between the housing 33 and the coil springs 34.

Thus, excellent workability of placement can be brought since the placement of the vibration isolator 30 is completed only by disposing the housing 33 between the propulsive engine 4 and the hull 2. Further, a simple external appearance can be achieved since the intermediate and high frequency attenuation members 40 are disposed inside the housing 33.

Although preferred embodiments of the present invention have been described above, the above-described structures can be modified, for example, as follows.

The structure as a feature of the third embodiment, where the intermediate and high frequency attenuation members 40 are disposed between the propulsive engine 4 and the second inclination part 22 (or between the hull 2 and the first inclination part 21) is applicable not only to the first embodiment but also to the second embodiment. Similarly, the structure as a feature of the fourth embodiment, where the intermediate and high frequency attenuation members 40 are disposed inside the housing 33 is applicable not only to the second embodiment but also to the first embodiment.

In the vibration isolators 20 and 30 described in the foregoing embodiments, the numbers of the coil springs 24 and 34 disposed inside the housings 23 and 33 may each be any number and are each not limited to two (i.e. may each be one or be three or more). The first inclination parts 21 and 31 and the second inclination parts 22 and 32 may be members that are integrally structured or be made by joining a plurality of members.

### Reference Signs List

- 2: hull
- 4: propulsive engine (engine)
- 5: elastic joint
- 6: propulsive unit
- 20, 30: vibration isolator
- 21, 31: first inclination part
- 22, 32: second inclination part
- 23, 33: housing
- 24, 34: coil spring
- 40: intermediate and high frequency attenuation member
- 100: vibration isolation engine

## Claims

1. A vibration isolator for an engine used for propulsion of a ship and disposed at an inclination with respect to a horizontal plane to have a rake angle, the vibration isolator comprising:
a coil spring that is disposed between a hull of the ship and the engine and absorbs vibration of the engine;
a first inclination part that has a first inclined surface corresponding to the rake angle and is disposed between the hull and the coil spring, the first inclination part causing an attachment surface for the coil spring on the side close to the hull to be inclined with respect to the hull so that the attachment surface approximates a horizontal plane; and
a second inclination part that has a second inclined surface corresponding to the rake angle and is disposed between the engine and the coil spring, the second inclination part causing an attachment surface for the coil spring on the side close to the engine to be inclined with respect to the engine so that the attachment surface approximates a horizontal plane.

2. The vibration isolator according to claim 1, comprising
a housing that accommodates the coil spring, wherein
the first inclination part is disposed between the housing and the hull, and
the second inclination part is disposed between the housing and the engine.

3. The vibration isolator according to claim 1, comprising
a housing that accommodates the coil spring, wherein
the first inclination part is disposed between the housing and the coil spring and on the side close to the hull, and
the second inclination part is disposed between the housing and the coil spring and on the side close to the engine.

4. The vibration isolator according to claim 1, wherein
an intermediate and high frequency attenuation member that attenuates intermediate and high frequency vibration is disposed at least between the hull and the coil spring or between the engine and the coil spring.

5. The vibration isolator according to claim 4, further comprising
a housing that accommodates the coil spring, wherein
the intermediate and high frequency attenuation member is disposed at least between the housing and the hull or between the housing and the engine.

6. The vibration isolator according to claim 4, comprising
a housing that accommodates the coil spring, wherein
the intermediate and high frequency attenuation member is disposed between the housing and the coil spring.

7. A vibration isolation engine comprising:
the vibration isolator according to claim 1; and
an engine whose vibration is isolated by the vibration isolator.
